# EUROPÄISCHE PATENTSCHRIFT

(11) **EP 3 387 298 B1**
(45) Veröffentlichungstag und Bekanntmachung des Hinweises auf die Patenterteilung: **09.10.2019**
(21) Anmeldenummer: 17702558.2
(22) Anmeldetag: 24.01.2017
(51) Int. Cl.: F16J 15/447, F16J 15/3292, F16H 57/029, H02K 5/124

(54) **DICHTUNG**
SEAL
JOINT D'ÉTANCHÉITÉ

(30) Priorität: 26.01.2016 DE 102016000711; 11.03.2016 DE 102016204007
(43) Veröffentlichungstag der Anmeldung: 17.10.2018
(73) Patentinhaber: Flender GmbH, 46395 Bocholt (DE)
(72) Erfinder: KLEIN-HITPASS, Michael, 46483 Wesel (DE); BACHLER, Oliver, 46395 Bocholt (DE); KLEIDT, Ingo, 47228 Duisburg (DE)
(74) Vertreter: Maier, Daniel Oliver
(86) Internationale Anmeldenummer: PCT/EP2017/051380
(87) Internationale Veröffentlichungsnummer: WO 2017/129543

(56) Entgegenhaltungen:
- DE-A1-102008 023 289
- DE-A1-102013 012 916
- DE-C- 818 530
- US-A- 5 833 372
- US-A1- 2011 291 363

## Beschreibung

In Vorrichtungen wie Getrieben oder Motoren werden Dichtungen verwendet, um den Eintritt von Staub und anderen unerwünschten Stoffen, z.B. Wasser, ins Innere der Vorrichtungen zu verhindern. Insbesondere an Stellen, an denen feststehende und bewegte Bauteile der Vorrichtungen aneinander grenzen, werden an Dichtungen hohe Anforderungen gestellt.

Es ist bekannt, als Dichtung zwischen rotierenden und nicht-rotierenden Bauteilen eine Kombination aus einer Labyrinthdichtung und einer Lamellendichtung zu verwenden (siehe bspw. DE 10 2013 012916 A1, US 5 833 372 A, DE 10 2008 023289 A1 oder DE 818 530 C).

Labyrinthdichtungen sind als Schutzdichtung beliebt, weil sie als berührungsfreie Dichtungen praktisch verschleißfrei arbeiten.

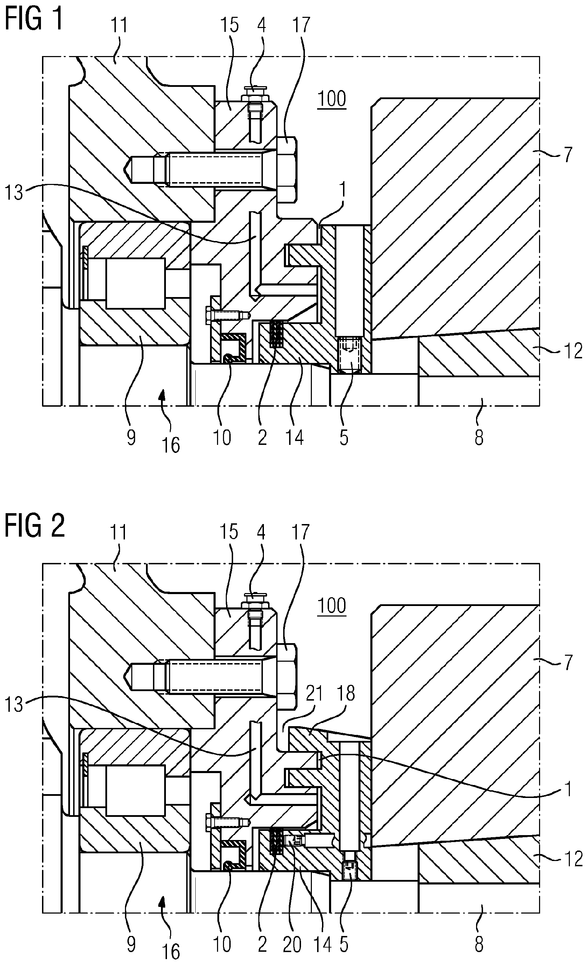

Eine solche bekannte Dichtung, umfassend eine Labyrinthdichtung 1 und eine Lamellendichtung 2, ist in Fig. 1 gezeigt, wo sie im Bereich des Eintritts einer GetriebeAntriebswelle 8 in ein Getriebe 16 angeordnet ist. Dabei ist die Lamellendichtung 2 in Richtung des Staubeintritts der Labyrinthdichtung 1 nachgelagert. Die Labyrinthdichtung 1 ist durch einen mäanderartig gebildeten Spalt zwischen einem nicht-rotierenden Bauteil 15 des Getriebes 16, hier: einem Lagerdeckel, und einem mit der Antriebswelle 8 rotierenden Bauteil 14 gebildet.

Das rotierende Bauteil 14 ist mithilfe von Gewindestiften 5 drehfest auf der Antriebswelle 8 des Getriebes 16 angeordnet. Die Gewindestifte 5 sind mit einem Klebstoff, z.B. Loctite®, gesichert. Zusätzlich ist das rotierende Bauteil 14 an der Getriebeantriebswelle 8 mit einem Klebstoff, z.B. Loctite®, gesichert. Auf der von dem Getriebe 16 abgewandten Seite des rotierenden Bauteil 14 ist eine Schrumpfscheibe 7 über einen konischen Ringabschnitt 12 auf der Getriebewelle 8 montiert, so dass eine Pressverbindung der Getriebewelle 8 mit einer nicht dargestellten Motorwelle ausgebildet wird.

Die Getriebewelle 8 ist mithilfe eines Wälzlagers 9 an dem Getriebegehäuse 11 gelagert. Mittels eines Gewindebolzens 17 ist das nicht-rotierende Bauteil 15 an dem Getriebegehäuse 11 befestigt. Das nicht-rotierende Bauteil 15 weist einen Schmierkanal 13 auf, durch welchen Schmierfett von einem Schmiernippel 4 zu dem Spalt der Labyrinthdichtung 1 transportiert werden kann. An dem die Getriebewelle 8 umgebenden Innenumfang des nicht-rotierenden Bauteils 15 ist ein Wellendichtring 10 angeordnet. Wellendichtringe (WDR) zählen zu den Berührungsdichtungen, da sie zum Abdichten eine sogenannte Lippe oder Dichtlippe besitzen, welche an einem rotierenden Bauteil anliegt. Die Dichtlippe des Wellendichtring 10 gleitet auf dem Außenumfang der Getriebewelle 8. Dieser Wellendichtring 10 dient in erste Linie dazu, das im Getriebeinnern befindliche Öl daran zu hindern, entlang der Getriebewelle 8 aus dem Getriebe 16 zu entweichen.

Am radial inneren, getriebeseitigen Ende des Labyrinthspalts 1 ist in das rotierende Bauteil 14 eine Lamellendichtung 2 eingelegt, welche den Labyrinthspalt 1 abdichtet, indem sie als eine zusätzliche Labyrinthdichtung wirkt. Diese in Fig. 1 gezeigte herkömmliche Dichtungsanordnung, umfassend eine Labyrinthdichtung 1 und eine Lamellendichtung 2, soll das Getriebeinnere vor dem Eindringen von unerwünschten Teilchen, insbesondere von Staubteilchen, aus der Umgebung 100 schützen.

Es ist Aufgabe der vorliegenden Erfindung, eine verbesserte Dichtung bereitzustellen. Diese Aufgabe wird gelöst durch eine Dichtung gemäß Anspruch 1. Vorteilhafte Weiterbildungen der Erfindung sind Gegenstand der abhängigen Ansprüche.

Die Erfindung betrifft eine Dichtungsanordnung zur Abdichtung eines radialen Spalts zwischen einer inneren ersten Komponente und einer äußeren zweiten Komponente, die relativ zueinander rotierbar sind. Die erste Komponente ist um eine Rotationsachse drehbar und die zweite Komponente ist koaxial zur ersten Komponente angeordnet. Dabei weist die Dichtungsanordnung ein dynamisches Dichtungsteil auf, welches mit der ersten Komponente verbunden ist, und die Dichtungsanordnung weist ein statisches Dichtungsteil auf, welches mit der zweiten Komponente verbunden ist. Die Dichtungsanordnung weist eine erste Labyrinthdichtung auf, welche durch einen Spalt zwischen einem ersten Abschnitt von gegenüberliegenden Oberflächen des dynamischen Dichtungsteils und des statischen Dichtungsteils geformt wird. Die Dichtungsanordnung weist eine Lamellendichtung auf, welche radial innerhalb der ersten Labyrinthdichtung angeordnet ist. Die Dichtungsanordnung weist einen mit der zweiten Komponente verbundenen Staubschutzdeckel auf, welcher radial außerhalb der ersten Labyrinthdichtung angeordnet ist.

Der radiale Spalt ist ein Spalt, welcher zwei Bauteile radial voneinander trennt. Die Bezeichnung "radial" bezieht sich auf eine Rotationsachse der relativ zueinander rotierbaren ersten und zweiten Komponente. Vorzugsweise handelt es sich um einen Ringspalt, welcher die innere erste Komponente ringförmig umgibt und von der äußeren zweiten Komponente beabstandet.

Das dynamische Dichtungsteil kann ein rotierbarer Ring sein, welcher zusammen mit der inneren ersten Komponente um die Rotationsachse rotiert und eine drehende, d. h. eine dynamische Wand der ersten Labyrinthdichtung bildet. Das statische Dichtungsteil bildet eine stehende, d.h. eine statische Wand der ersten Labyrinthdichtung; das statische Dichtungsteil kann ein Abschnitt der zweiten Komponente sein und/oder ein mit der zweiten Komponente verbundendes separates Bauteil. Es ist möglich, dass das statische Dichtungsteil zumindest teilweise durch einen Befestigungsring gebildet wird, welcher zur Befestigung einer Lamellendichtung an der zweiten Komponente dient; dabei kann der Befestigungsring mittels Schraubbolzen an der zweiten Komponente montiert sein.

Die erste Labyrinthdichtung weist vorzugsweise eine Fettschmierung auf, d. h. den Labyrinthspalt abdichtendes Fett, z.B. Lithiumfett, wird über einen Schmiernippel und einen damit verbundenen Schmierkanal in die Labyrinthdichtung gepresst. Durch die Fettbefüllung werden eventuell eingedrungene Schmutzpartikel kontinuierlich nach Außen befördert.

Der Spalt zwischen dem ersten Abschnitt von gegenüberliegenden Oberflächen des dynamischen Dichtungsteils und des statischen Dichtungsteils verläuft vorzugsweise zumindest abschnittsweise in radialer Richtung.

Die Lamellendichtung ist radial innerhalb der ersten Labyrinthdichtung angeordnet ist, bezogen auf die Rotationsachse. Unter dem Begriff "Lamellendichtung" wird in dieser Beschreibung eine Anordnung von einfach- oder mehrfach gewundenen Lamellenringen verstanden, die an der Abdichtstelle durch Einspiralen in eine Nut montiert werden kann. Eine Lamellendichtung wirkt als eine Labyrinthdichtung, welche ein berührungsloses bzw. berührungharmes Labyrinth mit sehr geringen Spaltweiten kombiniert. Eine Lamellendichtung weist in der Regel metallische Lamellenringe auf, die sehr genau bearbeitet (z.B. geschliffen und/oder geläppt) werden. Lamellendichtungen werden z.B. von der Fey Lamellenringe GmbH & Co. KG, 86343 Königsbrunn, DE, hergestellt.

Die Dichtungsanordnung weist einen mit der zweiten Komponente verbundenen Staubschutzdeckel auf, welcher radial außerhalb der ersten Labyrinthdichtung angeordnet ist, bezogen auf die Rotationsachse.

Bei der Erfindung handelt es sich um ein dreifaches, berührungsloses Dichtungssystem: die erfindungsgemäße Dichtungsanordnung umfasst eine Kombination aus einer Labyrinthdichtung und einer in Richtung des Staubeintritts der Labyrinthdichtung nachgelagerten Lamellendichtung, dadurch gekennzeichnet, dass die Dichtung außerdem einen Staubschutzdeckel umfasst, welcher den Eingangsspalt der Labyrinthdichtung abdeckt. Der bekannten Kombination aus Labyrinthdichtung und Lamellendichtung wurde also ein Staubschutzdeckel hinzugefügt. Dies hat die technische Wirkung, dass auch dann ein Eintritt von Staub aus einer Staubumgebung in den Dichtungsspalt verhindert wird, wenn die Fettschmierung der Labyrinthdichtung nicht mehr gegeben ist. Somit führt eine mangelnde Fettschmierung der Labyrinthdichtung, z. B. hervorgerufen durch eine Nichteinhaltung der vorgeschriebenen Schmierintervalle, nicht zu einem unerwünschtem Eintritt von Staub in das Innere einer durch die Dichtung abgedichteten Vorrichtung, z. B. eines Getriebes oder eines Motors.

Diese Dichtungsanordnung ist vorteilhaft einsetzbar bei Getrieben, z. B. bei Planetengetrieben, insbesondere von Getrieben, welche in staubigen Umgebungen wie Bergbauanwendungen eingesetzt sind.

Vorteilhafte Ausgestaltungen und Weiterbildungen der Erfindung sind in den abhängigen Ansprüchen angegeben.

Vorzugsweise sind alle Labyrinthdichtungen der Dichtungsanordnung vollständig fettgefüllt, insbesondere der Durchgangspfad von dem radial innersten Ende des Staubschutzdeckels bis zur Lamellendichtung.

Vorzugsweise sind der Staubschutzdeckel, die erste Labyrinthdichtung und die Lamellendichtung in dieser Reihenfolge nacheinander in der Dichtungsanordnung angeordnet, gesehen in Richtung eines Durchgangs durch die Dichtungsanordnung von einer Staubumgebung hin zu dem abzudichtenden radialen Spalt. Ein in die Dichtungsanordnung eindringendes Staubteilchen müsste also nacheinander den Staubschutzdeckel, die erste Labyrinthdichtung und die Lamellendichtung passieren, bevor es radialen Spalt erreichen kann. Dies zeigt, wie zuverlässig die vorliegende Dichtungsanordnung gegen eine Staubumgebung abdichtet.

Vorzugsweise ist zwischen dem Staubschutzdeckel und dem dynamischen Dichtungsteil ein Ringspalt ausgebildet, welcher radial nach Außen ansteigt, gesehen in Richtung eines Durchgangs durch die Dichtungsanordnung von einer Staubumgebung hin zu dem abzudichtenden radialen Spalt. Auf diese Weise müsste ein in die Dichtungsanordnung eindringendes Staubteilchen, nachdem es in den zwischen dem Staubschutzdeckel und dem dynamischen Dichtungsteil gebildeten Ringspalt gelangt ist, durch den Ringspalt wandern. Der Ringspalt wirkt als Labyrinthdichtung und ist vorzugsweise mit Fett gefüllt; daher ist es sehr unwahrscheinlich, dass ein Staubteilchen durch den Ringspalt gelangt und weiter in die Dichtungsanordnung eindringt. Die konische Ausführung des Staubschutzdeckels verhindert aufgrund des negativen Gefälles zur inneren ersten Komponente, z. B. einer Welle, das Eindringen von Schmutz.

Vorzugsweise ist die innere erste Komponente eine Welle, insbesondere eine An- oder Abtriebswelle einer Vorrichtung eines Antriebsstrangs, z. B. eines Getriebes oder eines Motors, vorzugsweise eines elektrischen Motors.

Vorzugsweise ist die äußere zweite Komponente ein Lagerdeckel, d. h. ein Bauteil zur Abdeckung eines Lagers, z.B. eines Wälz- oder Gleitlagers, in welchem eine Welle gelagert ist. Der Lagerdeckel kann eine um eine Rotationsachse rotierbare Welle ringförmig umgeben, selbst aber relativ zu der Welle fest an einem Getriebe- oder Motorgehäuse befestigt sein. Die erste Komponente ist also um eine Rotationsachse drehbar und die zweite Komponente ist koaxial zur ersten Komponente angeordnet. Der Lagerdeckel kann mit Schraubbolzen an einer Außenseite eines Getriebe- oder Motorgehäuses montiert sein. Der Lagerdeckel ist vorzugsweise aus einem metallischen Werkstoff gefertigt.

Nach der Lamellendichtung und vor dem abzudichtenden radialen Spalt, gesehen in Richtung eines Durchgangs durch die Dichtungsanordnung von einer Staubumgebung hin zu dem abzudichtenden radialen Spalt, ist ein Wellendichtring, vorzugsweise ein Radial-Wellendichtring (= RWDR), angeordnet, der mit der zweiten Komponente fest verbunden ist und dessen Dichtlippe an der inneren ersten Komponente anliegt. Vorzugsweise ist der Wellendichtring unmittelbar vor dem radialen Spalt angeordnet, gesehen in Richtung des Staubeintritts. Der Wellendichtring weist eine Dichtlippe auf, welche an der inneren ersten Komponente anliegt. Der Wellendichtring kann dazu dienen, einen Austritt eines niederviskosen Schmierstoffes, wie z.B. eines Öles, aus einer Antriebskomponente, z. B. einem Getriebe oder einem Motor, durch den radialen Spalt in Richtung zu der Staubumgebung zu verhindern. Der WDR dient insbesondere dazu, einen Austritt von Getriebeöl aus einem Getriebe entlang einer Getriebewelle zu verhindern. Somit wirkt das mehrfache Dichtungssystem nicht nur gegen den Eintritt von Staub, sondern auch auch gegen den Austritt niederviskoser Schmierstoffe, wie z. B. Öle.

Bei der Erfindung handelt es sich um ein dreifaches Dichtungssystem, um den nachgeschalteten WDR vor Beschädigungen zu schützen. Darüber hinaus soll bei einem eventuellen verschleißbedingten Ausfall des WDR verhindert werden, dass Schmutz in die Antriebskomponente eindringen kann.

Vorzugsweise weist die Dichtungsanordnung zwischen der Lamellendichtung und dem Wellendichtring eine zweite Labyrinthdichtung auf. Diese zweite Labyrinthdichtung kann ebenfalls mit Fett befüllt sein.

Bei der Dichtungsanordnung deckt der Staubschutzdeckel den zu einer Staubumgebung hin gelegenen Eingangsspalt der Labyrinthdichtung berührungslos ab. Vorzugsweise ist zwischen dem Staubschutzdeckel und einem von dem Staubschutzdeckel abgedeckten Bauteil, sei es ein mit der ersten Komponente oder ein mit der und zweiten Komponente verbundenes Bauteil, eine weitere, dritte Labyrinthdichtung ausgebildet, welche ebenfalls mit Fett befüllt sein kann.

Die Aufgabe wird außerdem gelöst durch eine Vorrichtung, wie ein Getriebe oder ein vorzugsweise elektrischer Motor, mit einer Welle, einem die Welle umschließenden Lagerdeckel und einer Dichtungsanordnung nach einem der Ansprüche 1 bis 10, wobei der Staubschutzdeckel an dem Lagerdeckel befestigt ist.

Vorzugsweise verringert sich der Außenumfang des Staubschutzdeckels, gesehen in axialer Richtung vom Lagerdeckel weg. Die konische Ausführung des Staubschutzdeckels verhindert aufgrund des negativen Gefälles zur inneren ersten Komponente, z.B. einer Welle, das Eindringen von Schmutz.

Vorzugsweise ist auf der Welle eine Schrumpfscheibe angeordnet, wobei die Dichtungsanordnung in einem axialen Zwischenraum zwischen dem Lagerdeckel und der Schrumpfscheibe angeordnet ist.

Vorzugsweise handelt es sich bei der Erfindung um folgenden Gegenstand: Getriebe mit einem Getriebegehäuse und einer aus dem Getriebegehäuse herausragenden Welle, einem die Getriebewelle umschließenden, koaxial zur Getriebewelle angeordneten Lagerdeckel und einer Dichtungsanordnung zur Abdichtung eines radialen Spalts zwischen der Getriebewelle und dem Lagerdeckel, die relativ zueinander rotierbar sind, wobei die Getriebewelle um eine Rotationsachse drehbar ist, wobei die Dichtungsanordnung einen dynamischen Dichtungsring aufweist, welcher fest auf der Getriebewelle montiert ist, wobei die Dichtungsanordnung einen statischen Dichtungsring aufweist, welches fest an dem Lagerdeckel montiert ist, wobei die Dichtungsanordnung eine erste, mit Fett gefüllte Labyrinthdichtung aufweist, welche durch einen Spalt zwischen einem ersten Abschnitt von gegenüberliegenden Oberflächen des dynamischen Dichtungsrings und des statischen Dichtungsrings geformt wird, wobei die Dichtungsanordnung eine Lamellendichtung aufweist, welche radial innerhalb der ersten Labyrinthdichtung angeordnet ist, wobei die Dichtungsanordnung einen fest am Lagerdeckel montierten Staubschutzdeckel aufweist, welcher radial außerhalb der ersten Labyrinthdichtung angeordnet ist, wobei der Staubschutzdeckel, die erste Labyrinthdichtung und die Lamellendichtung in dieser Reihenfolge nacheinander in der Dichtungsanordnung angeordnet sind, gesehen in Richtung eines Durchgangs durch die Dichtungsanordnung von einer Staubumgebung hin zu dem abzudichtenden radialen Spalt, wobei zwischen dem Staubschutzdeckel und dem dynamischen Dichtungsring ein Ringspalt ausgebildet ist, welcher radial nach Außen ansteigt, gesehen in Richtung eines Durchgangs durch die Dichtungsanordnung von der Staubumgebung hin zu dem abzudichtenden radialen Spalt, wobei zwischen der Lamellendichtung und dem abzudichtenden radialen Spalt, gesehen in Richtung eines Durchgangs durch die Dichtungsanordnung von der Staubumgebung hin zu dem abzudichtenden radialen Spalt, ein Wellendichtring angeordnet ist, der fest in dem Lagerdeckel angeordnet ist und dessen Dichtlippe an einem Umfang der Getriebewelle anliegt, wobei die Dichtungsanordnung zwischen der Lamellendichtung und dem Wellendichtring eine zweite Labyrinthdichtung aufweist, wobei der Staubschutzdeckel den zu einer Staubumgebung hin gelegenen Eingangsspalt der Labyrinthdichtung berührungslos abdeckt, und wobei die Lamellendichtung eine Anordnung von einfach- oder mehrfach gewundenen Lamellenringen ist, die an der Abdichtstelle durch Einspiralen montiert werden kann.

Die Aufgabe wird außerdem gelöst durch eine Verwendung einer Dichtungsanordnung nach einem der Ansprüche 1 bis 10 in einem Getriebe, insbesondere einem Planetengetriebe, zur Abdichtung einer Welle des Getriebes.

Im Folgenden wird die Erfindung anhand mehrerer Ausführungsbeispiele unter Zuhilfenahme der beiliegenden Zeichnungen erläutert. Es zeigt jeweils schematisch und nicht maßstabsgetreu
- Fig. 2: eine nicht erfindungsgemäße Dichtungsanordnung, bei der ein mit der ersten Komponente verbundenes Überdeckungselement zur Abdeckung der Labyrinthdichtung verwendet wird,
- Fig. 3: eine nicht erfindungsgemäße Dichtungsanordnung, bei der ein mit der ersten Komponente verbundenes Überdeckungselement zur Abdeckung der Labyrinthdichtung verwendet wird und ein V-Ring verwendet wird,
- Fig. 4: eine erfindungsgemäße Dichtungsanordnung, bei der der Staubschutzdeckel in die zweite Komponente integriert ist,
- Fig. 5: eine nicht erfindungsgemäße Dichtungsanordnung, bei der die Lamellendichtung durch einen V-Ring ersetzt ist,
- Fig. 6: eine erfindungsgemäße Dichtungsanordnung, die ähnlich zu der in Fig. 5 ausgebildet ist, bei der aber anstatt des V-Rings eine Lamellendichtung verwendet wird,
- Fig. 7: eine erfindungsgemäße Dichtungsanordnung, die ähnlich zu der in Fig. 4 ausgebildet ist und bei der zusätzlich ein V-Ring in die Labyrinthdichtung eingesetzt ist,
- Fig. 8: eine erfindungsgemäße Dichtungsanordnung, bei der der Staubschutzdeckel als separates Bauteil ausgebildet ist, und
- Fig. 9: eine erfindungsgemäße Dichtungsanordnung mit einer im Wesentlichen zu Fig. 8 gleichen Konstruktion, aber einer leicht geänderten Schulter am statisches Dichtungsteil.

Die in den Figuren 2 bis 9 gezeigten Konstruktionen sind im Bereich des Getriebes und der Schrumpfverbindung ähnlich zu der in Fig. 1 gezeigten Konstruktion. Bezüglich der detaillierten Erläuterung der einzelnen Bauteile wird insofern auf Fig. 1 verwiesen.

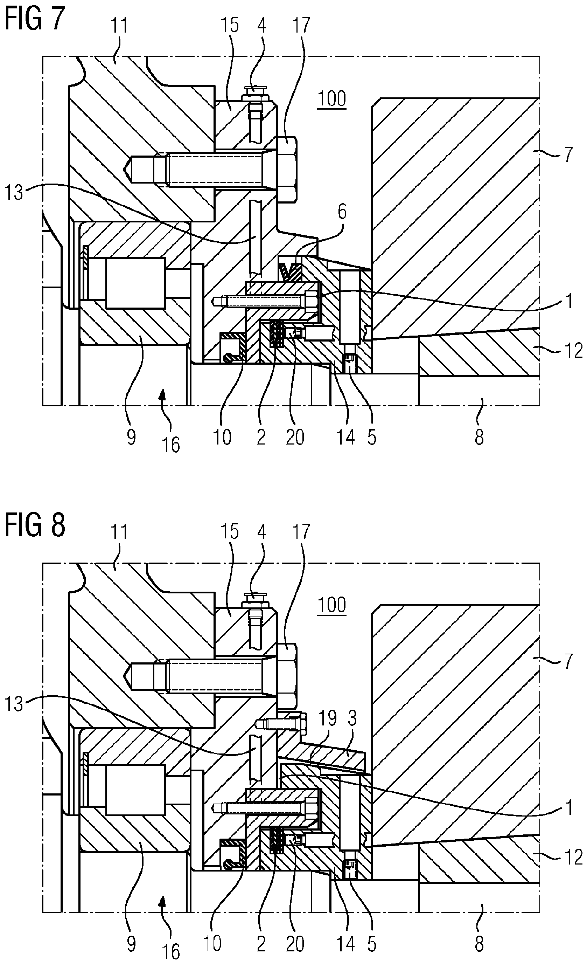

Fig. 8 zeigt eine bevorzugte Ausgestaltung der Erfindung. Im Vergleich zu der in Fig. 1 gezeigten Konstruktion wird der Eintritt der Labyrinthdichtung 1 durch einen ringförmigen Staubschutzdeckel 3 gegen die Umgebung abgeschirmt. Somit ist die Wahrscheinlichkeit, dass Staub zum Eintrittsbereich der Labyrinthdichtung 1 gelangt, vermindert. Aus der Umgebung 100 zu der Dichtung gelangende Staubteilchen werden außerdem durch die konische Form des Staubschutzdeckels 3 vom Getriebe 16 weg transportiert. Somit ist die Wahrscheinlichkeit, dass Staub zum Eintrittsbereich der Labyrinthdichtung 1 gelangt, weiter vermindert. Der Staubschutzdeckel 3 ist mittels Schrauben an dem nicht-rotierenden Bauteil 15, einem Lagerdeckel, befestigt. Selbst wenn Staub in den Spalt 19 zwischen dem Staubschutzdeckel 3 und dem rotierenden Bauteil 14 gelangen sollte, so muss jedes Staubteilchen erst entlang des langen Spalts 19 transportiert werden, bevor es in die Labyrinthdichtung 1 gelangen würde.

Die Ringe der Lamellendichtung 2 werden durch eine Schraube 20 in dem rotierenden Bauteil 14 gehalten. Das in die Labyrinthdichtung 1 gepresste Fett ist vorzugsweise Lithiumfett. Über den Außenumfang des nicht-rotierenden Bauteils 15 verteilt sind vorzugsweise mehrere Schmiernippel 4 zum Einpressen von Fett in die Labyrinthdichtung 1 vorgesehen, z.B. vier Stück gleichmäßig über den Umfang verteilt.

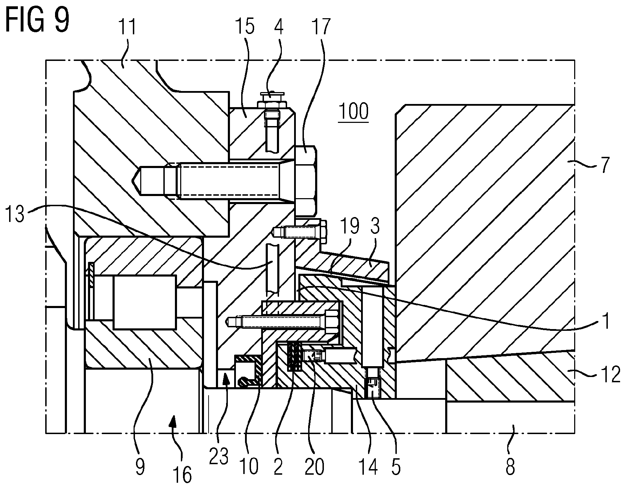

Fig. 9 zeigt eine alternative Ausgestaltung der Erfindung, bei der die zum Getriebeinnern hin angeordnete Schulter 23 des nicht-rotierenden Bauteils 15, an welcher der Wellendichtring 10 zum Getriebe 16 hin anliegt, radial weniger weit zur Antriebswelle 8 hin gezogen ist als in der in Fig. 8 gezeigten Konstruktion. Der Staubschutzdeckel 3 ist ähnlich wie in Fig. 8 angeführt.

Fig. 2 zeigt eine nicht erfindungsgemäße Dichtungsanordnung, nämlich eine Kombination aus einer Labyrinthdichtung 1 und einer in Richtung des Staubeintritts der Labyrinthdichtung nachgelagerten Lamellendichtung 2. Im Vergleich zu der in Fig. 1 gezeigten Konstruktion weist das rotierende Bauteil 14 an seinem Außenumfang ein Überdeckungselement 18 auf, das den Eintrittsbereich der Labyrinthdichtung 1 überdeckt und als Staubschutzdeckel der Labyrinthdichtung fungiert. Dabei ist der Außenumfang des Überdeckungselements 18 konisch ausgebildet, so dass aus der Umgebung 100 zu der Dichtung gelangende Staubteilchen durch die konische Form des Überdeckungselementes 18 vom Getriebe 16 weg transportiert werden. Zwischen dem Überdeckungselement 18 und dem nicht-rotierenden Bauteil 15 ist eine Sicke 21 ausgebildet.

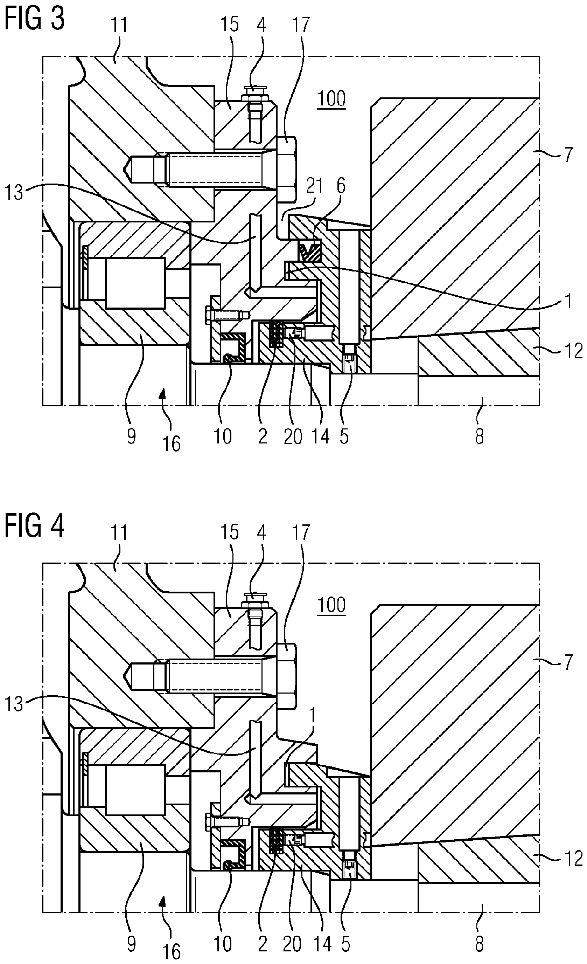

Fig. 3 zeigt eine weitere nicht erfindungsgemäße Dichtungsanordnung, nämlich eine Kombination aus einer Labyrinthdichtung, einem V-Ring und einer in Richtung des Staubeintritts der Labyrinthdichtung nachgelagerten Lamellendichtung. Im Vergleich zu der in Fig. 2 gezeigten Konstruktion ist im zu der Umgebung 100 hin gelegenen Ende der Labyrinthdichtung 1 zusätzlich ein V-Ring 6 eingesetzt. Das wie in Fig. 2 ausgebildete Überdeckungselement des rotierenden Bauteils 14 fungiert als Staubschutzdeckel der Labyrinthdichtung.

Fig. 4 zeigt eine weitere erfindungsgemäße Dichtungsanordnung, nämlich eine Kombination aus einer Labyrinthdichtung und einer in Richtung des Staubeintritts der Labyrinthdichtung nachgelagerten Lamellendichtung. Im Vergleich zu der in Fig. 2 gezeigten Konstruktion ist das rotierende Bauteil 14 an seinem Außenumfang so ausgebildet, dass keine Sicke gebildet wird. Eine abstehende Rippe des nicht-rotierenden Bauteils 15 fungiert als Staubschutzdeckel der Labyrinthdichtung.

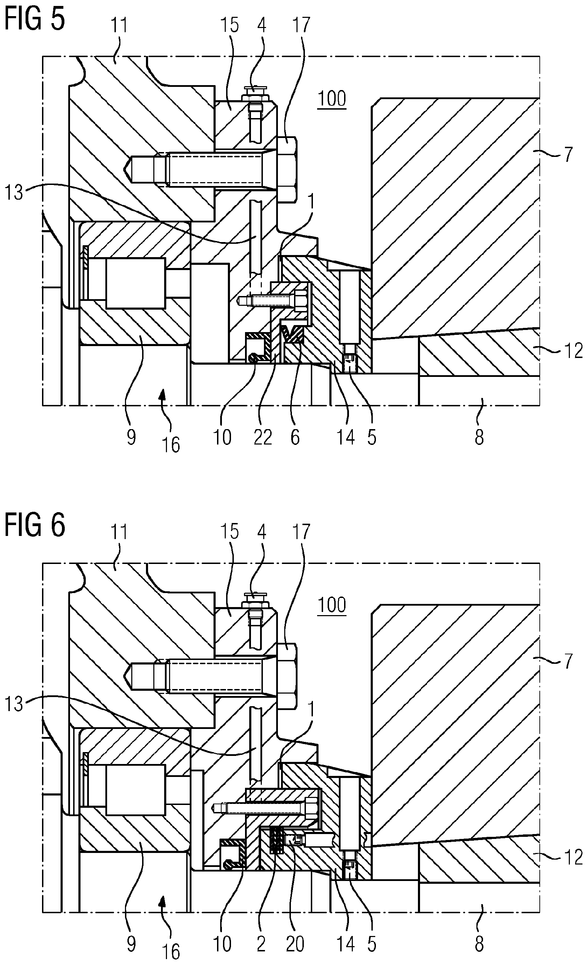

Fig. 5 zeigt eine weitere nicht erfindungsgemäße Dichtungsanordnung, nämlich eine Kombination aus einer Labyrinthdichtung und einem V-Ring. Im Vergleich zu der in Fig. 4 gezeigten Konstruktion ist die Lamellendichtung durch einen V-Ring 6 ersetzt. Der Wellendichtring 10 wird an seiner getriebeabgewandten Seite von einem weiteren separaten Bauteil gehalten. Diese Konstruktion gestattet einen einfacheren Wechsel des Wellendichtrings 10. Eine abstehende Rippe des nicht-rotierenden Bauteils 15 fungiert als Staubschutzdeckel der Labyrinthdichtung.

Fig. 6 zeigt eine weitere erfindungsgemäße Dichtungsanordnung, nämlich eine Kombination aus einer Labyrinthdichtung und einer in Richtung des Staubeintritts der Labyrinthdichtung nachgelagerten Lamellendichtung. Im Vergleich zu der in Fig. 5 gezeigten Konstruktion ist der V-Ring durch eine Lamellendichtung 2 ersetzt. Eine abstehende Rippe des nicht-rotierenden Bauteils 15 fungiert als Staubschutzdeckel der Labyrinthdichtung.

Fig. 7 zeigt eine weitere erfindungsgemäße Dichtungsanordnung, nämlich eine Kombination aus einer Labyrinthdichtung 1, einem V-Ring 6 und einer in Richtung des Staubeintritts der Labyrinthdichtung 1 nachgelagerten Lamellendichtung 2. Im Vergleich zu der in Fig. 6 gezeigten Konstruktion ist im zu der Umgebung 100 hin gelegenen Ende der Labyrinthdichtung 1 zusätzlich ein V-Ring 6 eingesetzt. Eine abstehende Rippe des nicht-rotierenden Bauteils 15 fungiert als Staubschutzdeckel der Labyrinthdichtung.

## Patentansprüche

1. Dichtungsanordnung zur Abdichtung eines radialen Spalts zwischen einer inneren ersten Komponente (8) und einer äußeren zweiten Komponente (15), die relativ zueinander rotierbar sind,
wobei die erste Komponente (8) um eine Rotationsachse drehbar und die zweite Komponente (15) koaxial zur ersten Komponente (8) angeordnet ist,
wobei die Dichtungsanordnung ein dynamisches Dichtungsteil (14) aufweist, welches mit der ersten Komponente (8) verbunden ist,
wobei die Dichtungsanordnung ein statisches Dichtungsteil (15) aufweist, welches mit der zweiten Komponente (15) verbunden ist,
wobei die Dichtungsanordnung eine erste Labyrinthdichtung (1) aufweist, welche durch einen Spalt zwischen einem ersten Abschnitt von gegenüberliegenden Oberflächen des dynamischen Dichtungsteils (14) und des statischen Dichtungsteils (15) geformt wird,
wobei die Dichtungsanordnung eine Lamellendichtung (2) aufweist, welche radial innerhalb der ersten Labyrinthdichtung (1) angeordnet ist,
wobei die Dichtungsanordnung einen mit der zweiten Komponente (15) verbundenen Staubschutzdeckel (3) aufweist, welcher radial außerhalb der ersten Labyrinthdichtung (1) angeordnet ist, **dadurch gekennzeichnet, dass** der Staubschutzdeckel (3) nur einseitig an der zweiten Komponente (15) befestigt ist.

2. Dichtungsanordnung nach Anspruch 1, wobei der Staubschutzdeckel (3), die erste Labyrinthdichtung (1) und die Lamellendichtung (2) in dieser Reihenfolge nacheinander in der Dichtungsanordnung angeordnet sind, gesehen in Richtung eines Durchgangs durch die Dichtungsanordnung von einer Staubumgebung (100) hin zu dem abzudichtenden radialen Spalt.

3. Dichtungsanordnung nach Anspruch 1 oder 2, wobei zwischen dem Staubschutzdeckel (3) und dem dynamischen Dichtungsteil (14) ein Ringspalt (19) ausgebildet ist, welcher radial nach Außen ansteigt, gesehen in Richtung eines Durchgangs durch die Dichtungsanordnung von einer Staubumgebung (100) hin zu dem abzudichtenden radialen Spalt.

4. Dichtungsanordnung nach einem der vorhergehenden Ansprüche, wobei die innere erste Komponente (8) eine Welle ist.

5. Dichtungsanordnung nach einem der vorhergehenden Ansprüche, wobei die äußere zweite Komponente (15) ein Lagerdeckel ist.

6. Dichtungsanordnung nach einem der vorhergehenden Ansprüche, wobei zwischen der Lamellendichtung (2) und dem abzudichtenden radialen Spalt, gesehen in Richtung eines Durchgangs durch die Dichtungsanordnung von einer Staubumgebung (100) hin zu dem abzudichtenden radialen Spalt, ein Wellendichtring (10) angeordnet ist, der mit der zweiten Komponente (15) fest verbunden ist und dessen Dichtlippe an der inneren ersten Komponente (8) anliegt.

7. Dichtungsanordnung nach Anspruch 6, wobei die Dichtungsanordnung zwischen der Lamellendichtung (2) und dem Wellendichtring (10) eine zweite Labyrinthdichtung (1) aufweist.

8. Dichtungsanordnung nach einem der vorhergehenden Ansprüche, wobei die erste Labyrinthdichtung (1) mit Fett gefüllt ist.

9. Dichtungsanordnung nach einem der vorhergehenden Ansprüche, wobei der Staubschutzdeckel (3) den zu einer Staubumgebung (100) hin gelegenen Eingangsspalt der Labyrinthdichtung (1) berührungslos abdeckt.

10. Dichtungsanordnung nach einem der vorhergehenden Ansprüche, wobei die Lamellendichtung (2) eine Anordnung von einfach- oder mehrfach gewundenen Lamellenringen ist, die an der Abdichtstelle durch Einspiralen montiert werden kann.

11. Vorrichtung wie Getriebe (16) oder Motor, mit einer Welle (8), einem die Welle (8) umschließenden Lagerdeckel (15) und einer Dichtungsanordnung nach einem der Ansprüche 1 bis 10, wobei der Staubschutzdeckel (3) an dem Lagerdeckel (15) befestigt ist.

12. Vorrichtung nach Anspruch 11, wobei der Außenumfang des Staubschutzdeckels (3) sich verringert, in axialer Blickrichtung weg vom Lagerdeckel (15).

13. Vorrichtung nach Anspruch 11 oder 12, wobei auf der Welle eine Schrumpfscheibe (7) angeordnet ist und die Dichtung in einem axialen Zwischenraum zwischen dem Lagerdeckel (15) und der Schrumpfscheibe (7) angeordnet ist.

14. Verwendung einer Dichtungsanordnung nach einem der Ansprüche 1 bis 10 in einem Getriebe (16), insbesondere einem Planetengetriebe, zur Abdichtung einer Welle (8) des Getriebes (16).

## Claims

1. Seal arrangement for sealing a radial gap between an inner first component (8) and an outer second component (15), which are rotatable relative to one another,
wherein the first component (8) is arranged rotatably about an axis of rotation and the second component (15) is arranged coaxially to the first component (8),
wherein the seal arrangement has a dynamic sealing part (14), which is connected to the first component (8),
wherein the seal arrangement has a static sealing part (15), which is connected to the second component (15),
wherein the seal arrangement has a first labyrinth seal (1), which is formed by a gap between a first section of opposing surfaces of the dynamic sealing part (14) and of the static sealing part (15),
wherein the seal arrangement has a laminar seal (2), which is arranged radially within the first labyrinth seal (1), wherein the seal arrangement has a dust protection cover (3) connected radially to the second component (15), which is arranged radially outside the first labyrinth seal (1), **characterised in that** the dust protection cover (3) is only fastened to the second component (15) on one side.

2. Seal arrangement according to claim 1, wherein the dust protection cover (3), the first labyrinth seal (1) and the laminar seal (2) are arranged in this order after one another in the seal arrangement, viewed in the direction of a through-hole through the seal arrangement from a dusty environment (100) through to the radial gap to be sealed.

3. Seal arrangement according to claim 1 or 2, wherein an annular gap (19) is embodied between the dust protection cover (3) and the dynamic sealing part (14), which increases radially outwards, viewed in the direction of a through-hole through the seal arrangement from a dusty environment (100) through to the radial gap to be sealed.

4. Seal arrangement according to one of the preceding claims, wherein the inner first component (8) is a shaft.

5. Seal arrangement according to one of the preceding claims, wherein the outer second component (15) is a bearing cover.

6. Seal arrangement according to one of the preceding claims, wherein a shaft sealing ring (10) is arranged between the laminar seal (2) and radial gap to be sealed, viewed in the direction of a through-hole through the seal arrangement from a dusty environment (100) through to the radial gap to be sealed, which is permanently connected to the second component (15) and of which the sealing lip rests against the inner first component (8).

7. Seal arrangement according to claim 6, wherein the seal arrangement has a second labyrinth seal (1) between the laminar seal (2) and the shaft sealing ring (10).

8. Seal arrangement according to one of the preceding claims, wherein the first labyrinth seal (1) is filled with grease.

9. Seal arrangement according to one of the preceding claims, wherein the dust protection cover (3) covers the entry gap of the labyrinth seal (1) facing towards a dusty environment (100) in a non-contact manner.

10. Seal arrangement according to one of the preceding claims, wherein the laminar seal (2) is an arrangement of singly and multiply wound lamella rings, which can be installed at the sealing point by insertion as spirals.

11. Device such as a gear (16) or motor, with a shaft (8), a bearing cover (15) surrounding the shaft (8) and a seal arrangement according to one of claims 1 to 10, wherein the dust protection cover (3) is fastened to the bearing cover (15).

12. Device according to claim 11, wherein the outer circumference of the dust protection cover (3) decreases in an axial direction of view away from the bearing cover (15).

13. Device according to claim 11 or 12, wherein a shrink disk (7) is arranged on the shaft and the seal is arranged in the axial space between the bearing cover (15) and the shrink disk (7).

14. Use of a seal arrangement according to one of claims 1 to 10 in a gear (16), in particular a planetary gear, for sealing a shaft (8) of the gear (16).

## Revendications

1. Dispositif d'étanchéité pour rendre étanche un intervalle radial entre un premier élément (8) intérieur et un deuxième élément (15) extérieur, qui peuvent tourner l'un par rapport à l'autre,
dans lequel le premier élément (8) peut tourner autour d'un axe de rotation et le deuxième élément (15) est disposé coaxialement au premier élément (8),
dans lequel le dispositif d'étanchéité a une partie (14) d'étanchéité dynamique, qui est reliée au premier élément (8),
dans lequel le dispositif d'étanchéité a une partie (15) d'étanchéité statique, qui est reliée au deuxième élément (15),
dans lequel le dispositif d'étanchéité a un premier joint (1) à labyrinthe, qui est formé par un intervalle entre une première partie de surfaces opposées de la partie (14) d'étanchéité dynamique et de la partie (15) d'étanchéité statique,
dans lequel le dispositif d'étanchéité a un joint (2) à lamelles, qui est disposé radialement à l'intérieur du premier joint (1) à labyrinthe,
dans lequel le dispositif d'étanchéité a un couvercle (3) de protection vis-à-vis de la poussière, qui est relié au deuxième élément (15) et qui est disposé à l'extérieur radialement du premier joint (1) à labyrinthe, **caractérisé en ce que** le couvercle (3) de protection vis-à-vis de la poussière n'est fixé que d'un côté au deuxième élément (15).

2. Dispositif d'étanchéité suivant la revendication 1, dans lequel le couvercle (3) de protection vis-à-vis de la poussière, le premier joint à labyrinthe et le joint (2) à lamelles sont disposés les uns derrière les autres dans cet ordre dans le dispositif d'étanchéité, considéré dans le sens d'un passage dans le dispositif d'étanchéité d'un environnement (100) de poussière à l'intervalle radial à rendre étanche.

3. Dispositif d'étanchéité suivant la revendication 1 ou 2, dans lequel il est constitué, entre le couvercle (3) de protection vis-à-vis de la poussière et la partie (14) d'étanchéité dynamique, un intervalle (19) annulaire, qui s'élève radialement vers l'extérieur, considéré dans le sens d'un passage dans le dispositif d'étanchéité, d'un environnement (100) de poussière à l'intervalle radial à rendre étanche.

4. Dispositif d'étanchéité suivant l'une des revendications précédentes, dans lequel le premier élément (8) intérieur est un arbre.

5. Dispositif d'étanchéité suivant l'une des revendications précédentes, dans lequel le deuxième élément (15) extérieur est un chapeau de palier.

6. Dispositif d'étanchéité suivant l'une des revendications précédentes, dans lequel il est monté, entre le joint (2) à lamelles et l'intervalle radial à rendre étanche, considéré dans le sens d'un passage dans le dispositif d'étanchéité, d'un environnement (100) de poussière à l'intervalle radial à rendre étanche, une bague (10) d'étanchéité d'arbre, qui est reliée fixement au deuxième élément (15) et dont la lèvre d'étanchéité s'applique au premier élément (8) intérieur.

7. Dispositif d'étanchéité suivant la revendication 6, dans lequel le dispositif d'étanchéité a un deuxième joint (1) à labyrinthe entre le joint (2) à lamelles et la bague (10) d'étanchéité d'arbre.

8. Dispositif d'étanchéité suivant l'une des revendications précédentes, dans lequel le premier joint (1) à labyrinthe est rempli de graisse.

9. Dispositif d'étanchéité suivant l'une des revendications précédentes, dans lequel le couvercle (3) de protection vis-à-vis de la poussière recouvre, sans contact, l'intervalle d'entrée, mis vers un environnement (100) de poussière, du joint (1) à labyrinthe.

10. Dispositif d'étanchéité suivant l'une des revendications précédentes, dans lequel le joint (2) à lamelles est un agencement de bagues à lamelles enroulées une fois ou plusieurs fois, qui peut être monté au point d'étanchéité par mise en spirale.

11. Dispositif comme engrenage (16) ou moteur, comprenant un arbre (8), un chapeau (15) de palier entourant l'arbre (8) et un dispositif d'étanchéité suivant l'une des revendications 1 à 10, le couvercle (3) de protection vis-à-vis de la poussière étant fixé au chapeau (15) de palier.

12. Dispositif suivant la revendication 11, dans lequel le pourtour extérieur du couvercle (3) de protection vis-à-vis de la poussière diminue dans la direction de vision axiale, en s'éloignant du chapeau (15) de palier.

13. Dispositif suivant la revendication 11 ou 12, dans lequel une frette (7) est montée sur l'arbre et l'étanchéité est disposée dans un espace intermédiaire axial entre le chapeau (15) de palier et la frette (7).

14. Utilisation d'un dispositif d'étanchéité suivant l'une des revendications 1 à 10, dans un engrenage (16), notamment dans un engrenage épicycloïdal, pour rendre étanche un arbre (8) de l'engrenage (16).
